# EUROPEAN PATENT SPECIFICATION

(11) **EP 2 446 752 B1**
(45) Date of publication and mention of the grant of the patent: **10.08.2016**
(21) Application number: 10792235.3
(22) Date of filing: 24.06.2010
(51) Int. Cl.: A23L 27/40, A23L 27/00, A23L 27/21, A23L 27/24, A23L 2/52

(54) **COMPOSITION FOR LOW-SALT FOOD OR BEVERAGE**
ZUSAMMENSETZUNG FÜR EIN NAHRUNGSMITTEL ODER GETRÄNK MIT GERINGEM SALZGEHALT
COMPOSITION POUR ALIMENT OU BOISSON PAUVRE EN SEL

(30) Priority: 26.06.2009 JP 2009152020
(43) Date of publication of application: 02.05.2012
(73) Proprietor: Ajinomoto Co., Inc., Tokyo 104-8315 (JP)
(72) Inventor: CHIBA, Sayuri, Kawasaki-shi Kanagawa 210-8681 (JP); SAEGUSA, Tadaaki, Kawasaki-shi Kanagawa 210-8681 (JP); ISHII, Mayu, Kawasaki-shi Kanagawa 210-8681 (JP)
(74) Representative: Strehl Schübel-Hopf & Partner
(86) International application number: PCT/JP2010/061227
(87) International publication number: WO 2010/150918

(56) References cited:
- WO-A2-2009/056737
- JP-A- 4 066 069
- JP-A- 2006 129 835
- US-A- 4 798 736
- MINORU MURAKAMI ET AL: "Atarashii Hakkogata Koso Bunkai Chomiryo ni Tsuite", NEW FOOD INDUSTRY, SHOKUHIN SHIZAI KENKYUKAI, TOKYO, JP, vol. 41, no. 6, 1 January 1999 (1999-01-01), pages 33-37, XP008165789, ISSN: 0547-0277
- MINORU MURAKAMI ET AL.: 'Atarashii Hakkogata Koso Bunkai Chomiryo ni Tsuite' NEW FOOD INDUSTRY vol. 41, no. 6, 1999, pages 33 - 37, XP008165789

## Description

### [Technical Field]

The present invention relates to a composition that contain a hydrolyzed vegetable protein and a yeast extract and a method therefor, for use in reduced-salt foods and beverages.

### [Background Art]

Salt is widely used as a basic flavor enhancer for seasoning food. On the other hand, excessive salt intake is known to have adverse effects in high-blood pressure and circulatory diseases such as heart disease. Over these backgrounds, there are commercial products such as salt substitutes, low-salt or reduced-salt flavor enhancers, and processed foods with low-salt or reduced-salt. A problem of such products, however, is the lack of good taste, for example, a plain taste and flavor, and disrupted taste balance, owning to the lack of saltiness.

As a solution to this problem, a method that uses a salt substitute and a saltiness enhancer is available as a method intended to maintain good taste by supplementing the salty taste with a substance other than salt, or a salt reducing method, as it is generally called. The salt substitute is a substance that has a salty taste by itself. The saltiness enhancer is a substance that does not have a salty taste itself, but enhances the salty taste of the coexisting salt. To date, many salt substitutes and saltiness enhancers have been reported.

The main component of many salt substitutes is potassium chloride. Potassium chloride has the characteristic bitterness and harsh taste. There are reports that the bitterness and harsh taste can be suppressed by mixing one or several components selected from glutamate, amino acid, organic acid salt, nucleic acid-based *umami* substance, and high sweeteners such as glycyrrhizin (Patent Literatures 1, 2, and 3). However, these techniques do not sufficiently suppress the bitterness and harsh taste of potassium chloride, and involve a problem, which is the exhibition of undesirable tastes such as an acid taste.

The saltiness enhancer is not a salt substitute, but enhances the salty taste of salt. There are reports of mixing one or several components selected from protein hydrolysates, sugars, organic acid salts, inorganic salts, and amino acids (Patent Literatures 4, 5, 6, 7, 8, 9, and 10). However, when these materials are added to reduced-salt foods and beverages that have a 25% or higher percentage reduction of a salt amount or sodium amount (high salt reduction) with respect to the standard food and beverage, mixing these materials as taught by these publications cannot impart good taste to such an extent as to sufficiently satisfy palatability, because of deficiencies such as weak effects and the unnecessary tastes, such as an acid taste, imparted by these materials.

Currently, a salt substitute and a saltiness enhancer that can effectively impart good taste to complement the lost salty taste to such an extent as to satisfy palatability are not available, and low-salt or reduced-salt flavor enhancers and processed foods are not common place. Further, there are no reports of materials with which the reduced palatability (reduced good taste) due to reduced salt can be solved without imparting a salty taste. Accordingly, there is a strong need for materials that can impart good taste to reduced-salt foods and beverages while solving the foregoing problems.

New Food Industry 1999 (Vol. 41, No. 6, pages 33-37, Minoru Murakami et al) describes a seasoning comprising a hydrolyzed vegetable protein and a yeast extract. The weight ratio of hydrolyzed vegetable protein to yeast extract is not disclosed.

### [Citation list]

### [Patent Literatures]

[Patent Literature 1] JP-A-57-138359
[Patent Literature 2] JP-A-59-187761
[Patent Literature 3] JP-A-11-187841
[Patent Literature 4] JP-A-07-289198
[Patent Literature 5] JP-A-2008-99624
[Patent Literature 6] JP-A-2007-289145
[Patent Literature 7] JP-A-03-139257
[Patent Literature 8] JP-A-63-137658
[Patent Literature 9] JP-A-62-3760
[Patent Literature 10] JP-A-58-187164

### [Summary of the Invention]

### [Problems that the Invention is to Solve]

A salt substitute and a saltiness enhancer are often used to impart good taste to reduced-salt foods and beverages. However, when these materials are added to, for example, a reduced-salt food or beverage that has a 25% or higher percentage reduction of a salt amount or sodium amount (high salt reduction) with respect to the standard food or beverage, good taste cannot be imparted to such an extent as to sufficiently satisfy palatability, because of deficiencies such as weak effects and the unnecessary tastes, such as an acid taste and bitterness, imparted by these materials. Over these backgrounds, the present invention provides food materials that can adjust the taste balance and can impart good taste to a reduced-salt food or beverage to such an extent as to sufficiently satisfy palatability for general purposes, without the need for imparting a salty taste.

### [Means for Solving the Problems]

The present inventors completed the present invention after intensive studies conducted to solve the foregoing problems. The present invention includes the following:
(1) A composition for a reduced-salt food or beverage, the composition including a HVP and a yeast extract mixed in the ranges 15 ≤ A ≤ 97 and 3 ≤ B ≤ 85, where A is the weight part of the mixed amount of the HVP, B is the weight part of the mixed amount of the yeast extract, and A + B = 100, wherein the hydrolyzed vegetable protein is obtainable by a method that includes a step of removing a fraction with a molecular weight of 20,000 or more using a membrane, a column, or electrophoresis.
(2) The composition for a reduced-salt food or beverage according to Invention (1) the composition comprising the mixture of a hydrolyzed vegetable protein and a yeast extract, mixed with one or more of amino acid, nucleic acid, organic acid, inorganic salt, and sugar alcohol.
(3) The composition for a reduced-salt food or beverage according to any one of Inventions (1) to (2), wherein the source of the vegetable protein is any one of cereals, beans, and nuts.

Note that the present invention encompasses any combination of the configurations below, and the representations of the present invention are interchangeable with regard to methods, apparatuses, and the like.

### [Advantages of the Invention]

The present invention can provide a method and a composition with which good taste can be imparted to a reduced-salt food or beverage without the need for imparting a salty taste.

### [Mode for Carrying Out the Invention]

In the present invention, reduced-salt food or beverage means a food or beverage with an 84 mg or more reduction of the sodium amount per 100 g of the food (100 ml for liquid products), or a food or beverage with a 20% or more percentage reduction of the salt amount or sodium amount with respect to the standard food or beverage. From the standpoint of prominently exhibiting the effect of adding the composition, or more specifically, imparting a more well-balanced flavor or taste, it is more preferable that the food or beverage be a food or beverage with a 120 mg or more reduction of the sodium amount per 100 g of salt (100 ml for liquid products), or a food or beverage with a 30% or more percentage reduction of the salt or sodium with respect to the standard food or beverage.

Further, in the present invention, the amount of intake salt in the food or beverage to which good taste is imparted is preferably 0.2% or more. A prominent effect can be obtained with 0.4% or more.

The present inventors conducted intensive studies, and found that the effect of imparting good taste to complement a loss due to insufficient salty taste remained weak when a HVP or a yeast extract is solely mixed with the reduced-salt food or beverage as defined by the present invention, but could be improved, rather surprisingly, by using the HVP and the yeast extract in combination. The present invention has been completed based on this finding.

It is important that the composition for a reduced-salt food or beverage of the present invention contains both (A) a HVP, and (B) a yeast extract. In is preferable that (C) one or more components selected from amino acids, nucleic acids, organic acids, inorganic salts, and sugar alcohols be contained with (A) the HVP, and (B) the yeast extract, because it prominently improves the effect. Specifically, a more well-balanced flavor or taste can be imparted this way. The composition for a reduced-salt food or beverage of the present invention has the effect of imparting and improving good taste by being added to a reduced-salt food or beverage. The form of the composition for a reduced-salt food or beverage is not particularly limited, and may be used in the form of, for example, a powder, a solid, a paste, or a solution. Further, the composition for a reduced-salt food or beverage may be used as the raw material of a reduced-salt food or beverage, or as a flavor enhancer such as a seasoned salt, *miso,* soy sauce, juice, gravy, sauce, dressing, and mayonnaise with reduced-salt level.

The composition for a reduced-salt food or beverage of the present invention is characterized by the addition of a HVP and a yeast extract. The mixed amounts of the HVP and the yeast extract are A weight part and B weight part, respectively, and they are mixed in the ranges 15 ≤ A ≤ 97 and 3 ≤ B ≤ 85, where A + B = 100. Further, when adding one or more components (C) selected from amino acids, nucleic acids, organic acids, inorganic salts, and sugar alcohols, the effect can be exhibited more prominently in the ranges 10 ≤ A ≤ 85, 3 ≤ B ≤ 40, and 12 ≤ C ≤ 50, where C is the weight part of the mixed amount of the total of the amino acid, nucleic acid, organic acid, inorganic salt, and sugar alcohol components (also may be referred to as component C in the present invention), and A + B + C = 100. Specifically, this is preferable as it imparts a more well-balanced flavor or taste. The composition for a reduced-salt food or beverage of the present invention has the effect of improving good taste by being added to a reduced-salt food or beverage.

The "flavor" as used in the present invention means the aroma that wafts into the nose from the mouth while eating or drinking (retronasal flavor). Further, the "taste" as used in the present invention means the strength, continuity, and expansion of the taste felt in the mouth while eating or drinking.

The "hydrolyzed vegetable protein (HVP) " as used in the present invention collectively refers to hydrolysates obtained by hydrolysis of vegetable proteins or the like with an enzyme or an acid. Preferably, the protein originates in cereals such as wheat, rice, and corn, or beans and nuts such as soybeans, because these products have a strong titer, and can impart a well-balanced flavor or taste. Further, it is preferable that the hydrolyzed vegetable protein be produced by a method that includes steps corresponding to one or more of the steps (a) to (i) below, because it produces a stronger titer, and can impart a more well-balanced flavor and taste.
(a) a step of performing hydrolysis at a pH of 6 or less
(b) a step of performing hydrolysis at a pH of 8 or more
(c) a step of mixing an alkaline solution with a protein hydrolysis solution for de-sodium
(d) a step of performing enzymatic hydrolysis at a temperature of 20 to 40°C and a pH of 6 to 9 using a liquid koji or a solid koji
(e) a step of performing hydrolysis without a salt
(f) a step of separating koj i mold cells from the protein hydrolysis solution by centrifugation or filtration and drying the obtained solution,
(g) a step of performing decoloration by a membrane treatment and/or with activated carbon
(h) a step of concentrating at a pH of 8 or more
(i) a step of removing a fraction with a molecular weight of 20,000 or more using a membrane, a column, or electrophoresis.

The yeast extract as used in the present invention collectively refers to liquids obtained by extracting the yeast contents, or powders obtained by drying such liquids. Preferably, the yeast extract is of the genus *Saccharomyces,* for example, a *Saccharomyces cerevisiae* beer yeast, a bread yeast, a *sake* yeast, and a wine yeast, or of the torula yeast (*Candida utilis*), because these yeasts have a strong titer, and can impart a well-balanced flavor or taste. Note that the "yeast extract No. 2" (bread yeast extract, Ajinomoto Co., Inc.) used in Examples of the present invention contains *Saccharomyces cerevisiae.* Yeast extracts obtained by heating a mixture of glutathione-containing yeast extract and sugar are more preferable for their stronger titer and the ability to impart a more well-balanced flavor or taste. Yeast extracts with a total nitrogen content of 7% or less are also preferable for their even stronger titer and the ability to impart an even more well-balanced flavor or taste. The method for acquiring the yeast extract is not particularly limited, and is generally an autolysis method, an acid degradation method, or an enzyme degradation method.

The "amino acids" as used in the present invention refers to amino acids and/or amino acid salts. For example, sodium glutamate, alanine, methionine, sodium aspartate, arginine, lysine hydrochloride are particularly preferred for their strong titer and the ability to impart a well-balanced flavor or taste.

In the present invention, the particularly preferred nucleic acid is sodium inosinate for its strong titer and the ability to impart a well-balanced flavor or taste.

The "organic acids" as used in the present invention refers to organic acids and/or organic acid salts. For example, trisodium citrate, succinic acid, potassium bitartrate, calcium lactate, and sodium fumarate are particularly preferred for their strong titer and the ability to impart a well-balanced flavor or taste.

In the present invention, the inorganic salts are not particularly limited, and, for example, potassium salts, magnesium salts, calcium salts, sodium salts, and ammonia salts may be used. Dipotassium hydrogen phosphate and/or anhydrous potassium carbonate are particularly preferred for their strong titer and the ability to impart a well-balanced flavor or taste.

In the present invention, sugar alcohols are not particularly limited, and, for example, maltitol, mannitol, and sorbitol may be used. Sorbitol is particularly preferred for its strong titer and the ability to impart a well-balanced flavor or taste.

In the present invention, the concentration at the eating or drinking of a food and beverage refers to the concentration at the time of eating or drinking a food and beverage, after the food or beverage is cooked. In the present invention, the composition for a reduced-salt food or beverage is contained in the food and beverage preferably in 5 ppm or more and 0.65% or less at the time of eating or drinking, because it increases the titer, and can impart a well-balanced flavor or taste. Concentrations above or below this range are not preferable from the standpoint of imparting good taste. The effect of adding the composition for a reduced-salt food or beverage becomes weak when the concentration is below the foregoing range. Above the foregoing concentration range, an odd flavor such as an irritating odor may generate. From the standpoint of further increasing the titer and imparting a more well-balanced flavor or taste, the concentration of the composition for a reduced-salt food or beverage is preferably 0.02% or more and 0.09% or less.

The composition for a reduced-salt food or beverage used in the present invention may be mixed with a reduced-salt food or beverage or with a reduced-salt flavor enhancer at any time, and the timing is not particularly limited. The effect of imparting good taste to a reduced-salt food or beverage can be obtained regardless of whether the composition for a reduced-salt food or beverage is added to the raw material of the food or beverage or the flavor enhancer prior to production, or added during or after the production of the food or beverage or the flavor enhancer, or immediately before or while eating or drinking the food or beverage or the flavor enhancer.

Any raw material can be used for the composition for a reduced-salt food or beverage used in the present invention, as long as it is usable for food and beverage, and may be materials with various histories, including, for example, synthesized, extracted, and fermented products, and materials subjected to heat reaction.

In the present invention, the reduced-salt food or beverage to which good taste is imparted is not particularly limited. The composition for a reduced-salt food or beverage of the present invention may be used in any form, for example, by being (i) added in a flavor enhancer form to a reduced-salt food or beverage, (ii) added to a reduced-salt food or beverage after being diluted with water or a solvent, (iii) added to a reduced-salt food or beverage in the form of a protein hydrolysate or a yeast extract, (iv) mixed as the raw material of a reduced-salt flavor enhancer of a powder, solid, or liquid form, or (v) mixed as the raw material of reduced-salt processed food and reduced-salt fishery and meat processed food. Specific examples include rice, rice ball, vegetable, pickle, *tempura,* boiled egg, snack, cereal, saute, low-salt or reduced-salt flavor enhancers (such as seasoned salt, *miso,* soy sauce, juice, gravy, sauce, dressing, and mayonnaise), processed food such as soup (including soups for soup cups and instant noodles), and roux, and low-salt or reduced-salt fishery and processed meat products such as *kamaboko, chikuwa, satsuma age,* ham, and sausage.

The present invention is described below in more detail based on Examples. Note, however, that the Examples below do not limit the technical scope of the present invention in any ways. Further, in Examples, sensory evaluations were performed by four well-trained special panelists with an average of more than 10 years of experience in food industry, unless otherwise stated.

### [Examples]

### (Example 1: Confirmation of the Effect of Adding the Composition for Reduced-salt food or Beverage at Various Concentrations in Vegetable Soup System)

### <Preparation of Vegetable Soup>

Carrot (150 g), onion (150 g), cabbage (150 g), water (1,500 g), and salt (6 g) were placed in a pot, heated to boil over high heat, and stewed at low heat for 30 minutes after boiling. The scum was removed as it appeared while heating and stewing. After 30 minutes of stewing, the stewed soup was drained with a strainer to separate the soup from the vegetables , and the soup was used as a vegetable soup in the experiment below (intake salt concentration 0.4%).

### <Addition of the Composition for Reduced-salt food or Beverage to Vegetable Soup at Various Concentrations>

A HVP (a dry powder obtained by spray drying an enzymatically hydrolyzed wheat solution (enzymatically hydrolyzed for at least 20 hours) after purifying the solution and removing a fraction with a molecular weight of 20,000 or more using a ultrafiltration membrane), and a yeast extract ("yeast extract No. 2", bread yeast extract; Ajinomoto Co., Inc.) were added to the vegetable soup in the same proportions to make the total intake concentration of the two components 1 ppm, 10 ppm, 0.01%, 0.03%, 0.05%, 0.08%, 0.1%, 0.2%, 0.3%, and 0.4%. A vegetable soup without addition of these two components was used as a control.

Note that the control had a low intake salt content, and was characterized by a plain poor taste, and an unbalanced bad taste, compared to a soup that had an intake salt concentration of 0.8%, a common standard concentration. The composition for reduced-salt food of the present invention was added to this vegetable soup that had a weakly salty, plain, disrupted taste to examine the effect of adding the composition, specifically the good taste imparting effect.

Sensory evaluations were made based on (1) strength of salty taste, (2) taste satiety (sensation of taste satisfaction), (3) taste balance, and (4) good taste (overall judgment). Scores were assigned according to the following criteria.
+++: Very clear effect over the control
++: Clear effect over the control
+: Higher effect over the control
-: No clear effect or undesirable effect over the control
Excellent: Very clear good taste imparting effect over the control
Good: Clear good taste imparting effect over the control
Acceptable: Higher good taste imparting effect over the control
Poor: No clear good taste imparting effect, or undesirable good taste imparting effect over the control
Note that evaluations were made at the eating temperature of 75°C to 65 degrees.

**[Table 1]**

| Table 1: Confirmation of the Effect of Adding the Composition for Reduced-Salt Food or Beverage at Various Concentrations in Vegetable Soup System | | | | |
|---|---|---|---|---|
| | Vegetable soup | | | |
| Concentration of two components (intake concentration) | Strength of salty taste | Taste satiety (taste satisfaction) | Taste balance | Overall good taste |
| 0 ppm (Control) | - | - | - | Poor |
| 1 ppm | - | - | - | Poor |
| 10 ppm | - | + | + | Acceptable |
| 0.01% | - | ++ | + | Acceptable |
| 0.03% | - | ++ | ++ | Good |
| 0.05% | - | ++ | ++ | Good |
| 0.08% | - | ++ | ++ | Good |
| 0.1% | - | ++ | + | Acceptable |
| 0.2% | - | +++ | + | Acceptable |
| 0.3% | - | +++ | + | Acceptable |
| 0.4% | - | +++ | - | Poor |

From the results presented in Table 1, it was confirmed that the good taste imparting effect was exhibited when the total intake concentration of the two components in the vegetable soup system was higher than 1 ppm and less than 0.4%, while the strength of salty taste did not differ greatly in all test groups compared to the control. The range above 0. 01% and less than 0.1% was found to be more desirable in terms of a taste balance. The effect was unnoticeable at or below 1 ppm. The addition was considered excessive at 0.4%, because it produced an odd flavor, including an irritating odor.

### (Example 2: Confirmation of the Effect of Adding the Composition for Reduced-Salt Food or Beverage at Various Concentrations in Chicken Soup System)

### <Preparation of Chicken Soup>

A wing (200 g), a leg (150 g), water (800 g), and salt (3.2 g) were placed in a pot, heated to boil over high heat, and stewed at low heat for 30 minutes after boiling. The scum was removed as it appeared while heating and stewing. After 30 minutes of stewing, the meat was taken out, and the broth was filtered through a cooking paper. The oil floating on the filtered liquid was skimmed, and the remaining liquid was obtained as a chicken soup (intake salt concentration 0.4%).

### <Addition of the Composition for Reduced-Salt Food or Beverage to Chicken Soup at Various Concentrations>

A HVP (a dry powder obtained by spray drying an enzymatically hydrolyzed wheat solution (enzymatically hydrolyzed for at least 20 hours) after purifying the solution and removing a fraction with a molecular weight of 20,000 or more using a ultrafiltration membrane), and a yeast extract ("yeast extract No. 2", bread yeast extract; Ajinomoto Co., Inc.) were added to the chicken soup in the same proportions to make the total intake concentration of the two components 1 ppm, 10 ppm, 0.01%, 0.03%, 0.05%, 0.08%, 0.1%, 0.2%, 0.3%, 0.4%, 0.5%, 0.6%, and 0.7%. A chicken soup without addition of these two components was used as a control.

Note that the control had a low intake salt content, and was characterized by a plain poor taste, and an unbalanced bad taste, compared to a soup that had an intake salt concentration of 0. 8%, a common standard concentration. The composition for reduced-salt food of the present invention was added to this vegetable soup that had a weakly salty, plain, disrupted taste to examine the effect of adding the composition, specifically the good taste imparting effect.

Sensory evaluations were made based on (1) strength of salty taste, (2) taste satiety (sensation of taste satisfaction), (3) taste balance, and (4) good taste (overall judgment). Scores were assigned according to the following criteria.
+++: Very clear effect over the control
++: Clear effect over the control
+: Higher effect over the control
-: No clear effect or undesirable effect over the control
Excellent: Very clear good taste imparting effect over the control
Good: Clear good taste imparting effect over the control
Acceptable: Higher good taste imparting effect over the control
Poor: No clear good taste imparting effect, or undesirable good taste imparting effect over the control
Note that evaluations were made at the eating temperature of 75°C to 65 degrees.

**[Table 2]**

| Table 2: Confirmation of the Effect of Adding the Composition for Reduced-Salt Food or Beverage at Various Concentrations in Chicken Soup System | | | | |
|---|---|---|---|---|
| | Chicken soup | | | |
| Concentration of two components (intake concentration) | Strength of salty taste | Taste satiety (taste satisfaction) | Taste balance | Overall good taste |
| 0 ppm (control) | - | - | - | Poor |
| 1 ppm | - | - | - | Poor |
| 10 ppm | - | - | - | Poor |
| 0.01% | - | + | + | Acceptable |
| 0.03% | - | ++ | ++ | Good |
| 0.05% | - | ++. | ++ | Good |
| 0.08% | - | ++ | ++ | Good |
| 0.1% | - | ++ | + | Acceptable |
| 0.2% | - | +++ | + | Acceptable |
| 0.3% | - | +++ | + | Acceptable |
| 0.4% | - | +++ | + | Acceptable |
| 0.5% | - | +++ | + | Acceptable |
| 0.6% | - | +++ | + | Acceptable |
| 0.7% | - | +++ | - | Poor |

From the results presented in Table 2, it was confirmed that the good taste imparting effect was exhibited when the total intake concentration of the two components in the chicken soup system was higher than 10 ppm and less than 0.7%, while the strength of salty taste did not differ greatly in all test groups compared to the control. The range above 0.01% and less than 0.1% was found to be more desirable in terms of a taste balance. The effect was unnoticeable at or below 10 ppm. The addition was considered excessive at 0.7%, because it produced an odd flavor, including an irritating odor.

### (Example 3: Comparison of Individual Components and Combinations of the Composition for Reduced-Salt Food or Beverage in Vegetable Soup)

The following individual components (0.08% each) were added to the vegetable soup prepared in Example 1.
1) A HVP (a dry powder obtained by spray drying an enzymatically hydrolyzed wheat solution (enzymatically hydrolyzed for at least 20 hours) after purifying the solution and removing a fraction with a molecular weight of 20,000 or more using a ultrafiltration membrane).
2) A HVP (a dry powder obtained by spray drying a desalted, concentrated solution of enzymatically hydrolyzed soybean).
3) A hydrolyzed animal protein (HAP) (a dry powder obtained by spray drying a deionized solution of enzymatically hydrolyzed pig gelatin).
4) Yeast extract ("yeast extract No. 2", bread yeast extract, Ajinomoto Co., Inc.).
5) Yeast extract (yeast extract obtained by heating a mixture of a glutathione-containing yeast extract and sugar) .
   In the same manner, the following components were added in combination to the vegetable soup in a total concentration of 0.08%.
6) A HVP (a dry powder obtained by spray drying an enzymatically hydrolyzed wheat solution (enzyme-degraded for at least 20 hours) after purifying the solution and removing a fraction with a molecular weight of 20,000 or more using a ultrafiltration membrane), and a yeast extract ("yeast extract No. 2", bread yeast extract; Ajinomoto Co., Inc.).
7) A HVP (a dry powder obtained by spray drying a desalted, concentrated solution of enzymatically hydrolyzed soybean), and a yeast extract ("yeast extract No. 2" , bread yeast extract; Ajinomoto Co., Inc.).
8) A HVP (a dry powder obtained by spray drying an enzymatically hydrolyzed wheat solution (enzymatically hydrolyzed for at least 20 hours) after purifying the solution and removing a fraction with a molecular weight of 20,000 or more using a ultrafiltration membrane), a yeast extract ("yeast extract No. 2", bread yeast extract; Aj inomoto Co. , Inc.), and a yeast extract (yeast extract obtained by heating a mixture of a glutathione-containing yeast extract and sugar).
9) A HAP (a dry powder obtained by spray drying a deironized solution of enzymatically hydrolyzed pig gelatin), and a yeast extract ("yeast extract No. 2", bread yeast extract; Ajinomoto Co., Inc.).
10) A HAP (a dry powder obtained by spray drying a deironized solution of enzymatically hydrolyzed pig gelatin), a yeast extract ("yeast extract No. 2", bread yeast extract; Ajinomoto Co., Inc.), and a yeast extract (yeast extract obtained by heating a mixture of a glutathione-containing yeast extract and sugar).

These components were added in the same proportions in the systems in which two or more components were added. Specifically, each component was added in 0.04% in 6), 7), and 9) in which two components were added. In 8) and 10) in which three components were added, each component was added in 0.027%. A vegetable soup without addition of the components was used as a control.

Note that the control had a low intake salt content, and was characterized by a plain poor taste, and an unbalanced bad taste, compared to a soup that had an intake salt concentration of 0.8%, a common standard concentration. The composition for reduced-salt food of the present invention was added to this vegetable soup that had a weakly salty, plain, disrupted taste to examine the effect of adding the composition, specifically the good taste imparting effect.

Sensory evaluations were made based on (1) strength of salty taste, (2) taste satiety(sensation of taste satisfaction), (3) taste balance, and (4) good taste (overall judgment). Scores were assigned according to the following criteria.
+++: Very clear effect over the control
++: Clear effect over the control
+: Higher effect over the control
-: No clear effect or undesirable effect over the control
Excellent: Very clear good taste imparting effect over the control
Good: Clear good taste imparting effect over the control
Acceptable: Higher good taste imparting effect over the control
Poor: No clear good taste imparting effect, or undesirable good taste imparting effect over the control
Note that evaluations were made at the eating temperature of 75°C to 65 degrees.

**[Table 3]**

| Table 3: Comparison of Individual Components and Combinations of the Composition for Reduced-Salt Food or Beverage in Vegetable Soup | | | | | | | |
|---|---|---|---|---|---|---|---|
| | | | | Vegetable soup | | | |
| | | | | Strength of salty taste | Taste satiety (taste satisfaction) | Taste balance | Overall good taste |
| Control (no addition) | | | | - | - | - | Poor |
| Individual components | HVP | 1) | Enzymatically hydrolyzed wheat | - | + | - | Poor |
| | | 2) | Enzymatically hydrolyzed bean | - | + | - | Poor |
| | HAP | 3) | Enzymatically hydrolyzed pig gelatin | - | + | - | Poor |
| | Yeast extract | 4) | Bread yeast extract | - | + | - | Poor |
| | | 5) | Glutathione-containing yeast + sugar | - | + | - | Poor |
| | HVP + yeast extract | 6) | Enzymatically hydrolyzed wheat | - | ++ | ++ | Good |
| | | | Bread yeast extract | | | | |
| | | 7) | Enzymatically hydrolyzed bean | - | ++ | ++ | Good |
| | | | Bread yeast extract | | | | |
| | | 8) | Enzymatically hydrolyzed wheat | - | +++ | +++ | Excellent |
| Combinations | | | Bread yeast extract | | | | |
| | | | Glutathione-containing yeast + sugar | | | | |
| | HAP + yeast extract | 9) | Enzymatically hydrolyzed pig gelatin | - | ++ | - | Poor |
| | | | Bread yeast extract | | | | |
| | | 10) | Enzymatically hydrolyzed pig gelatin | - | +++ | - | Poor |
| | | | Bread yeast extract | | | | |
| | | | Glutathione-containing yeast + sugar | | | | |

From the results of Table 3, it was confirmed that, while the strength of salty taste did not differ greatly in all test groups compared to the control, the effect was weaker with the HVP and the yeast extract alone, and that the good taste imparting effect was exhibited by the synergy of the two components. It was also found that adding the yeast extract obtained by heating a mixture of a glutathione-containing yeast extract and sugar could produce the effect more prominently. Specifically, it was possible to impart a more well-balanced flavor or taste.

### (Example 4: Confirmation of Optimum Proportions of Hydrolyzed Vegetable Protein and Yeast Extract)

A HVP (a dry powder obtained by spray drying an enzymatically hydrolyzed wheat solution (enzymatically hydrolyzed for at least 20 hours) after purifying the solution and removing a fraction with a molecular weight of 20,000 or more using a ultrafiltration membrane), and a yeast extract ("yeast extract No. 2", bread yeast extract; Ajinomoto Co., Inc.) were added in different proportions to the vegetable soup prepared in Example 1 to make the total intake concentration of the two components 0.08%. A vegetable soup without addition of these two components was used as a control. Note that the control had a low intake salt content, and was characterized by a plain poor taste, and an unbalanced bad taste, compared to a soup that had an intake salt concentration of 0.8%, a common standard concentration. The composition for reduced-salt food of the present invention was added to this vegetable soup that had a weakly salty, plain, disrupted taste to examine the effect of adding the composition, specifically the good taste imparting effect.

Sensory evaluations were made based on (1) strength of salty taste, (2) taste satiety (sensation of taste satisfaction), (3) taste balance, and (4) good taste (overall judgment). Scores were assigned according to the following criteria.
+++: Very clear effect over the control
++: Clear effect over the control
+: Higher effect over the control
-: No clear effect or undesirable effect over the control
Excellent: Very clear good taste imparting effect over the control
Good: Clear good taste imparting effect over the control
Acceptable: Higher good taste imparting effect over the control
Poor: No clear good taste imparting effect, or undesirable good taste imparting effect over the control
Note that evaluations were made at the eating temperature of 75°C to 65 degrees.

**[Table 4]**

| Table 4: Confirmation of Optimum Proportions of Hydrolyzed Vegetable Protein and Yeast Extract | | | | | | | | | | | | |
|---|---|---|---|---|---|---|---|---|---|---|---|---|
| Mixture No. | | 1 | 2 | 3 | 4 | 5 | 6 | 7 | 8 | 9 | 10 | 11 |
| A | HVP (Enzymatically hydrolyzed wheat) | 0 | 20 | 30 | 40 | 50 | 60 | 70 | 80 | 90 | 95 | 100 |
| B | Yeast extract (bread yeast extract) | 100 | 80 | 70 | 60 | 50 | 40 | 30 | 20 | 10 | 5 | 0 |
| Sensory Evaluation | Strength of salty taste | - | - | - | - | - | - | - | - | - | - | - |
| | Taste satiety (taste satisfaction) | ++ | ++ | ++ | ++ | ++ | ++ | ++ | ++ | ++ | ++ | + |
| | Taste balance | - | + | + | + | ++ | ++ | + | + | + | ++ | - |
| | Overall good taste | Poor | Acceptable | Acceptable | Acceptable | Good | Good | Acceptable | Acceptable | Acceptable | Good | Poor |

From the results presented in Table 4, it was confirmed that, while the strength of salty taste did not differ greatly in all test groups compared to the control, the good taste imparting effect was present in the ranges 0 < A < 100 and 0 < B < 100, where A was the weight part of the mixed amount of the HVP, B was the weight part of the mixed amount of the yeast extract, and A + B = 100. It was speculated from the patterns seen in Table 4 that the good taste imparting effect was present in the ranges 15 ≤ A ≤ 97 and 3 ≤ B ≤ 85, where A + B = 100.

### (Example 5: Confirmation of Optimum Proportions of (A) HVP, (B) Yeast Extract, and (C) Component C Such as Amino Acid)

A HVP (a dry powder obtained by spray drying an enzymatically hydrolyzed wheat solution (enzymatically hydrolyzed for at least 20 hours) after purifying the solution and removing a fraction with a molecular weight of 20,000 or more using a ultrafiltration membrane), a yeast extract ("yeast extract No.2", bread yeast extract; Aj inomoto Co. , Inc.), and (C) a component such as an amino acid were added in different proportions to the vegetable soup prepared in Example 1 to make the total intake concentration of the three components 0.08%. A vegetable soup without addition of these three components was used as a control. Note that the control had a low intake salt content, and was characterized by a plain poor taste, and an unbalanced bad taste, compared to a soup that had an intake salt concentration of 0.8%, a common standard concentration. The composition for reduced-salt food of the present invention was added to this vegetable soup that had a weakly salty, plain, disrupted taste to examine the effect of adding the composition, specifically the good taste imparting effect.

Sensory evaluations were made based on (1) strength of salty taste, (2) taste satiety (sensation of taste satisfaction), (3) taste balance, and (4) good taste (overall judgment). Scores were assigned according to the following criteria.
+++: Very clear effect over the control
++: Clear effect over the control
+: Higher effect over the control
-: No clear effect or undesirable effect over the control
Excellent: Very clear good taste imparting effect over the control
Good: Clear good taste imparting effect over the control
Acceptable: Higher good taste imparting effect over the control
Poor: No clear good taste imparting effect, or undesirable good taste imparting effect over the control
Note that evaluations were made at the eating temperature of 75°C to 65 degrees.

**Table 5: Confirmation of Optimum Proportions of (A) HVP, (B) Yeast Extract, and (C) Component Such as Amino Acid**

| Mixture No. | | 1 | 2 | 3 | 4 | 5 | 6 | 7 | 8 | 9 |
|---|---|---|---|---|---|---|---|---|---|---|
| A | HVP (enzymatically hydrolyzed wheat) | 0 | 20 | 30 | 40 | 50 | 60 | 70 | 80 | 90 |
| B | Yeast extract (bread yeast extract) | 90 | 35 | 30 | 25 | 20 | 15 | 10 | 5 | 0 |
| C | Amino acid, etc. | 10 | 45 | 40 | 35 | 30 | 25 | 20 | 15 | 10 |
| Sensory Evaluation | Strength of salty taste | - | - | - | - | - | - | - | - | - |
| | Taste satiety (taste satisfaction) | ++ | +++ | +++ | +++ | +++ | +++ | +++ | +++ | ++ |
| | Taste balance | - | + | ++ | +++ | ++ | ++ | +++ | ++ | - |
| | Overall good taste | Poor | Acceptable | Good | Excellent | Good | Good | Excellent | Good | Poor |

The component C (amino acid, etc.) in Table 5 was a mixture that contains at least one of sodium glutamate, alanine, methionine, sodium aspartate, arginine, lysine hydrochloride, sodium inosinate, trisodium citrate, succinic acid, potassium bitartrate, calcium lactate, sodium fumarate, dipotassium hydrogen phosphate, anhydrous potassium carbonate, and sorbitol.

From the results presented in Table 5, it was confirmed that, while the strength of salty taste did not differ greatly in all test groups compared to the control, the good taste imparting effect was present in the ranges 20 ≤ A ≤ 80, 5 ≤ B ≤ 35, and 15 ≤ C ≤ 45, where A was the weight part of the mixed amount of the HVP, B was the weight part of the mixed amount of the yeast extract, C was the weight part of the component C (amino acid, etc.), and A + B +C = 100. It was speculated from the patterns seen in Table 5 that the good taste imparting effect was present in the ranges 10 ≤ A ≤ 85, 3 ≤ B ≤ 40, and 12 ≤ C ≤ 50, where A + B + C = 100.

### [Industrial Applicability]

The present invention relates to a composition for use in reduced-salt foods or beverages that include a mixture of a hydrolyzed vegetable protein and a yeast extract.

## Claims

1. A composition for a reduced-salt food or beverage, the composition comprising a mixture of a hydrolyzed vegetable protein and a yeast extract, wherein 15 ≤ A ≤ 97 and 3 ≤ B ≤ 85 in the mixture, where A is the weight part of the mixed amount of the hydrolyzed vegetable protein, B is the weight part of the mixed amount of the yeast extract, and A + B = 100, wherein the hydrolyzed vegetable protein is obtainable by a method that includes a step of removing a fraction with a molecular weight of 20,000 or more using a membrane, a column, or electrophoresis.

2. The composition for a reduced-salt food or beverage according to claim 1, the composition comprising the mixture of a hydrolyzed vegetable protein and a yeast extract, mixed with one or more of amino acid, nucleic acid, organic acid, inorganic salt, and sugar alcohol.

3. The composition for a reduced-salt food or beverage according to claim 1 or 2, wherein the source of the vegetable protein is any one of cereals, beans, and nuts.

## Patentansprüche

1. Zusammensetzung für ein Nahrungsmittel oder Getränk mit reduziertem Salzgehalt, wobei die Zusammensetzung ein Gemisch aus einem hydrolysierten Pflanzenprotein und einem Hefeextrakt enthält, wobei 15 ≤ A ≤ 97 und 3 ≤ B ≤ 85 in dem Gemisch, wobei A die Gewichtsteile der zugemischten Menge des hydrolysierten Pflanzenproteins ist, B der Gewichtsteil der zugemischten Menge des Hefeextrakts ist und A + B = 100, wobei das hydrolysierte Pflanzenprotein durch ein Verfahren erhältlich ist, das eine Stufe umfasst, in der eine Fraktion mit einem Molekulargewicht von 20.000 oder mehr unter Einsatz einer Membran, einer Säule oder von Elektrophorese entfernt wird.

2. Zusammensetzung für ein Nahrungsmittel oder Getränk mit reduziertem Salzgehalt nach Anspruch 1, wobei die Zusammensetzung das Gemisch aus einem hydrolysierten Pflanzenprotein und einem Hefeextrakt im Gemisch mit einem oder mehreren Mitgliedern der aus Aminosäure, Nukleinsäure, organischer Säure, anorganischer Säure und Zuckeralkohol bestehenden Gruppe umfasst.

3. Zusammensetzung für ein Nahrungsmittel oder Getränk mit reduziertem Salzgehalt nach Anspruch 1 oder 2, wobei die Quelle des Pflanzenproteins beliebig unter Getreiden, Bohnen und Nüssen ausgewählt ist.

## Revendications

1. Composition pour un aliment ou une boisson ayant une teneur réduite en sel, la composition comprenant un mélange d'une protéine végétale hydrolysée et d'un extrait de levure, dans laquelle 15 ≤ A ≤ 97 et 3 ≤ B ≤ 85 dans le mélange, où A est la partie en poids de la quantité mélangée de la protéine végétale hydrolysée, B est la partie en poids de la quantité mélangée de l'extrait de levure, et A + B = 100, où la protéine végétale hydrolysée peut être obtenue par un procédé qui comprend une étape d'élimination d'une fraction ayant un poids moléculaire de 20 000 ou plus en utilisant une membrane, une colonne, ou une électrophorèse.

2. Composition pour un aliment ou une boisson ayant une teneur réduite en sel selon la revendication 1, la composition comprenant le mélange d'une protéine végétale hydrolysée et d'un extrait de levure, mélangé avec un ou plusieurs d'un acide aminé, un acide nucléique, un acide organique, un sel inorganique, et un alcool de sucre.

3. Composition pour un aliment ou une boisson ayant une teneur réduite en sel selon la revendication 1 ou 2, où la source de la protéine végétale est l'une quelconque de céréales, haricots, et noix.
